# EUROPEAN PATENT APPLICATION

(11) **EP 1 126 663 A2**
(43) Date of publication of application: **22.08.2001**
(21) Application number: 01301245.5
(22) Date of filing: 14.02.2001
(51) Int. Cl.: H04L 12/28, H04L 29/12

(54) **Service sign on**

(30) Priority: 19.02.2000 CN 00001014
(71) Applicant: Nice Talent Limited, Tortola (VG)
(72) Inventor: Tang, Pak Hung, Shatin, New Territories (HK)
(74) Representative: Godwin, Edgar James

(57) **Abstract**

Service Sign On ("SSO") is applicable, for example, to the following applications on an IP internetworking infrastructure: Cable TV or cable-modem based network infrastructure; digital data networks on telecommunications networks and intelligent building networks built on Cat 5 structured block wiring. The functionality of the SSO enables telecommunications network operators to: Exercise control over the access of an individual user to the broadband IP network even if connectionless transmission mode is used, account for the usage duration and communication volume of an individual user; implement access and service policy on how the user uses the network resources, and acquire information about the access devices used by individual users in connection to the network. The SSO has the following unique features and advantages over other solutions: no need to use further gateway on top of the IP internetworking infrastructure for user access management; no need to use any additional layer channel protocol for access management; and effective use of the existing network facility to establish access management on a particular user, such as bandwidth control, user priority administration, control over the access device connection, and service quality control.

## Description

The need for Service Sign On arises from the deployment of broadband IP internetworking infrastructure. Examples of a broadband IP internetworking infrastructure include high-speed IP networks over cable TV infrastructure or intelligent building networks based on structured wiring. Both of these examples are based on a connection-less transmission medium in layer 2 of the OSI model, one over RF (radio frequency) and the other based on IEEE 802.3. With a connection-less data link control layer, there is no natural point in the network itself (OSI model layer 3 or below) for performing user authentication when a user starts to use the network services. It is therefore difficult to account for when the user starts to use the network and when the user stops using the network.

It is an object of the invention to overcome or at least reduce this problem.

According to the invention there is provided a service sign-on (SSO) method for use by an internet service provider (ISP) or a network owner in a broadband IP internetworking infrastructure for user authentication to permit access of an access device to use network service(s) enabled by the said infrastructure and subsequent access records keeping, said access device being configured for DHCP and incorporating a software supporting Java applet, which method comprises providing a database for storing user-related information, providing a DHCP server for answering DHCP packets from said access device via an existing internetworking device in said infrastructure to establish communication of said access device via the internetworking device with a SSO web server, providing said SSO web server for serving a sign on form to said access device to commence a pre-sign-on state for user authentication, and providing said SSO web server for serving Java applet to said access device to maintain a session representing that access to said network service and/or to automate DHCP IP address lease renewal; providing said SSC web server for controlling assignment of IP address to the said access device; providing said SSO web server for activating a per user access and service control policy on the internetworking devices and providing a DNS server for answering DNS queries from said access device via the internetworking device for permitting access of said access device to said network service, and means for monitoring and receiving records relating to that access for accounting purpose.

Preferably, the internetworking device is an electronic device or computer system that is deployed by said ISP or network owner in a communication path between said access device and the Internet or internal server system, that can be commanded by said SSO web server, using IETF standards IP communication protocol to activate said per user access and service policy. More preferably, the internetworking device is provided by a router.

Further more preferably, the router is an edge router connected closest to said access device.

The router may be an edge router connected nearest to said access device. Internetworking devices may be any electronic device(s) or computer system(s) that are deployed by said ISP or network owner in a communication path between said access device and the Internet or internal server system(s), that can be commanded by a trusted process, such as said SSO web server using IETF standards IP communication protocol(s) to activate said per user access and service policy.

A Service Sign On method according to the invention will now be described by way of example with reference to the accompanying schematic drawings in which :-
Figure 1 is a normal user workstation start up;
Figure 2 is stage 1 of a Service Sign On;
Figure 3 is stage 2 of a Service Sign On;
Figure 4 is a Sign Off stage; and
Figure 5 is a Time-out stage.

The Service Sign On method is a mechanism that is designed to resolve the difficulties of the prior art by making it possible for internet service providers (ISPs) or network owners to:
a) Control user access to a broadband IP network even if connection-less transmission medium is used;
b) Account for usage duration and other usage related parameters;
c) Implement access and service policy on how the user uses the network resources; and
d) Acquire information about the access device used by the user.

The whole mechanism is based on open IETF-based standard IP communication protocols and can be implemented on commercially available hardware and software. Some of the open protocols that are used in the mechanism include DHCP, DNS, HTTP, SNMP and TELNET.

It is assumed that user information is captured by a separate registration process. This user registration process will capture at a minimum the following information in a centralized data store:
a) Username and password
b) Access policy such as restricted access from a specific cable modem or physical ports
c) Service policy such as class of service and types of service subscribed

Use Process
1) User needs to ensure that an access device is configured for DHCP and have a software, such as a browser, installed that support Java applet.
2) User plugs the access device to a service connection point, such as an Ethernet port of a cable modem or a RJ-45 connector that connects to an Ethernet hub or switch.
3) User starts up the access device (say boots a PC).
4) User opens the browser and connects to a Service Sign On web site.
5) User can only access the Service Sign On (SS0) Web Server before sign on. All other traffic will be blocked by the router.
6) User prompted for username and password.
7) User asked to wait for service sign on to complete.
8) Service sign on completed.
9) User starts to use the network services that he is authorized.
10) During the sign on period, a Java applet should be kept active.

The SSO mechanism makes use of five different system components that can be installed in different computers or in the same computer. The five components are:
1) DHCP server
2) User information data store
3) SSO web server
4) DNS server
5) Accounting record data store

The DHCP server answers DHCP packets from the access device in both a pre-sign-on and post-sign-on state.

The user information data store contains all the user related information such as username, password, access policy and service policy for the user.

The SSO web server executes the servlet and serves the Java applet(s) to the access devices. The servlet authenticates the user, checks the user authorizations, activates access and/or service policy in the router and/or other internetworking devices.

The DNS server answers DNS queries from the access device during the pre-sign-on state and post-sign-on state.

The accounting record data store receives all connection related records for a particular user session as generated by the servlet or a daemon.
Pre-sign-on means that the access device is yet to trigger the SSO mechanism.

Post-sign-on means that the servlet has completed the verification and policy enforcement process.

A session means the period between a session-start record and a session-end record that the servlet generates for the accounting record data store.

There are five processes in the whole SSO method:
1) Initial access device activation process
2) Browser to SSO web server process
3) Servlet sign-on verification process
4) Post-sign-on access device activation process
5) Logout or timeout process

An initial Access Device Activation Process (Process 1) is as follows:-
1) Access device starts up and issues a DHCP DISCOVER packet that contains a MAC address of the access device.
2) DHCP server checks its internal database to verify if the MAC address is registered. In the pre-sign-on state, the MAC address is not registered with the DHCP server.
3) DHCP server builds a DHCP OFFER to offer the access device a temporary IP address and the IP address of the spoof DNS server.
4) Access device issues a DHCP REQUEST to request for the temporary IP address.
5) DHCP server performs step 2 and 3 again and builds a DHCP ACK packet.

Browser to SSO Web Server Process (Process 2) is as follows:-
1) User starts the web browser and opens the SSO web site.
2) The access device attempts to resolve the host name by sending a DNS QUERY packet to the DNS server.
3) The DNS server resolves all host names to the IP address of the SSO web server.
4) The HTTP request goes to the SSO web server.
5) SSO web server returns a sign-on form to the user browser.

Servlet Sign-on Verification Process (Process 3) is as follows:-
1) User enters username and password and submits the form.
2) Servlet checks the username and password against the user information data store.
3) If okay, servlet retrieves access and service policy for the particular user.
4) Servlet determines the IP address of the access device from HTTP meta-variables.
5) Servlet checks the DHCP server for the MAC address of the access device.
6) Servlet verifies conformance of the access policy by sending out SNMP queries and/or TELNET connection to relevant internetworking devices.
7) Servlet issues a command to the DHCP server to register the access MAC address with an appropriate policy rule set.
8) Servlet creates a random session identifier and makes an entry to a temporary data store.
9) Servlet sets the session identifier into the browser in the form of cookie.
10) Servlet downloads a lease-renewal Java applet to the user browser.

Post-sign-on Access Device Activation Process (Process 4) is as follows:-
1) The lease-renewal Java applet initiates a DHCP lease release and renew. The exact action may be platform dependent.
2) Access device issues a DHCP DISCOVER packet containing a MAC address.
3) DHCP server looks up the MAC address and should find the MAC address registered.
4) DHCP server builds a DHCP OFFER with a valid IP address according to appropriate policy rule set.
5) Access device issues a DHCP REQUEST for a lease on the IP address offered.
6) DHCP server performs steps 3 and 4 again and builds the DHCP ACK packet.
7) Java applet issues a special session-start HTTP request to SSO servlet.
8) Servlet retrieves the session record based on the session identifier in the meta-variable.
9) Servlet implements the access and service policy onto the router and other internetworking devices using SNMP, TELNET or some other open protocols.
10) Servlet sends out the service sign on complete page to the user browser.
11) A new browser window is automatically started with a keep-alive Java applet embedded.
12) Servlet writes a session-start record to the local data store.

Logout or Timeout Process (Process 5) is as follows:-
1) The keep-alive Java applet periodically sends out special session keep-alive HTTP request to the SSO servlet.
2) SSO servlet updates the session record showing the last active timestamp.
3) If user clicks a LOGOUT button on the Java applet:
   a. Java applet sends a special session end HTTP request to the SSO servlet.
   b. Servlet writes session-end record to the accounting record data store.
   c. Servlet performs a clean up chores including removing the session record from the local data store, removing the MAC address from the DHCP server and removing any access and service policy from the router and other internetworking devices.
4) If user de-activates the access device or closes the Java applet:
   a. A background daemon in the web server periodically scans the local data store for session records.
   b. For session records that have expired, daemon performs the clean up chores including write session-end record to accounting record data store, remove session record from local data store, remote the MAC address from the DHCP server and remove any access and service policy from the router and other internetworking devices.

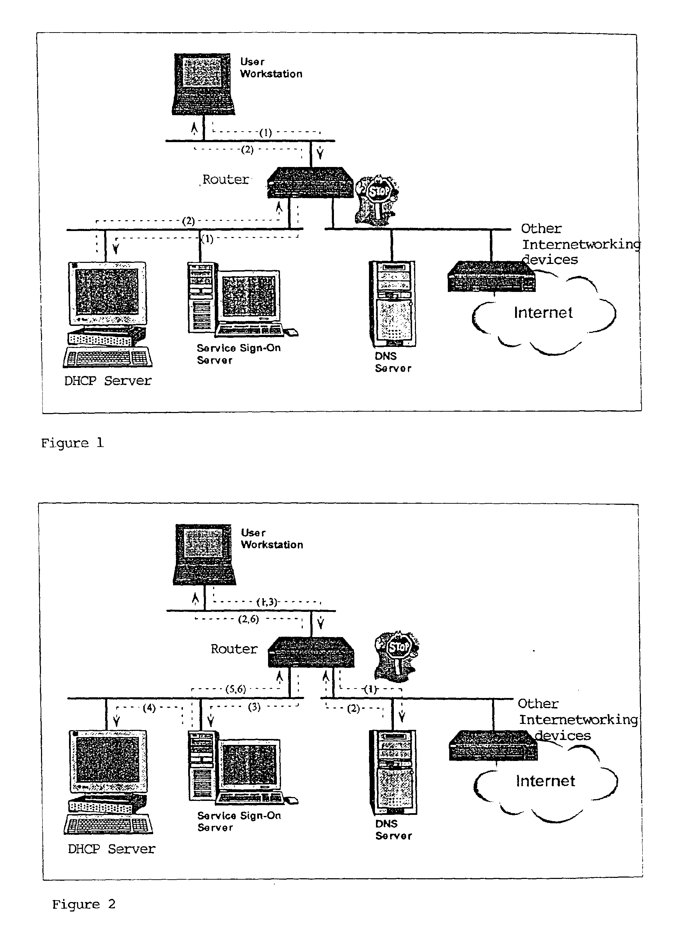

To illustrate the method reference is now made to the Figures. In Figure 1 the user workstation is being set up to use DHCP for IP configuration. In a normal boot sequence, it raises a DHCP request. The DHCP server responses and allocates a temporary IP address which is barred by the Router from going out to Internet.

In Figure 2, the user brings up the web browser for service sign-on. It sets URL to the Service Sign-On Server which triggers a DNS look up. DNS protocol is allowed to go through the Router. The DNS server replies with the IP address of the internal Service Sign-On Server. Web browser opens HTTP connection with the Service Sign-On Server. User is required to supply ID and password.

If authentication is successful, a CGI program or servlet will check if this access is authorized based on pre-defined rules and restrictions. In case of successful user authentication and authorization, a CGI program or servlet will be activated to configure the DHCF server such that a public IP address will be assigned to this particular user workstation the next time DHCP request is received from it. Reply is sent back to the browser with status update and Java applet for follow-up actions.

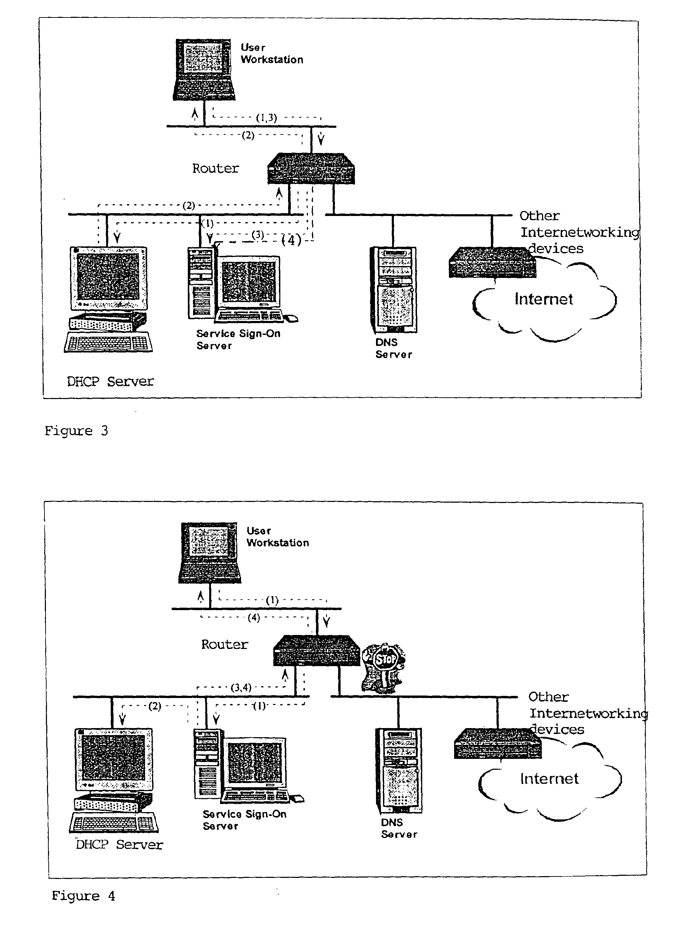

In Figure 3, a Java applet in the responding HTML page triggers a DHCP release. Thus, DHCP request is sent. The DHCP server responses with the updated IP configuration. A Java applet in the responding HTML page starts notifying the Service Sign-On Server periodically so that the Service Sign-On Server will keep this configuration intact. On the first request from the Java applet, a CGI program or servlet will be activated to configure the newly assigned public IP address into the access list of the router to allow the new IP address to route through for Internet access.

In Figure 4, the User has decided to terminate his access and clicks on a "Disconnect" button on the web page. Service Sign-On Server revokes the DHCP configuration for this workstation. Entry in the access list of the Router for this workstation is removed. Service Sign-On Server sends completing HTML message to the workstation. Service Sign-On Server updates accounting record.

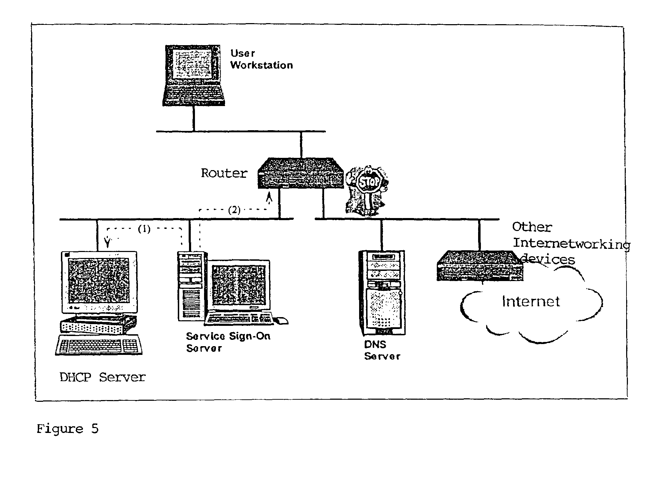

In Figure 5, in the Java applet in the web browser of the user workstation stops notifying the Service Sign-On Server of its presence (e.g. quit browser, workstation shutdown, etc.), the Service Sign-On Server will revoke the DHCP configuration for this workstation. Entry in the access list of the Router for this workstation is removed. Thus, no further access from this workstation to the Internet is allowed. Service Sign-On Server updates accounting record.

It is quite possible to provide the Service Sign-On according to the invention without a steps that force an access device to change the temporary IP address to a public IP address in Process 3 Step 7, 10 and Process 4 Step 1 to 8. This can be achieved simply by allocating to the access device a default public IP access in Process 1 Step 3. If in Process 3 Step 3 to 4 it is determined that it is acceptable for the user to continue to use the default public IP address, Process 3 Step 7, 10, Process 4 Step 1 to 8 and the clean up chore of removing the MAC address from the DHCP server can be skipped.

The described methods or mechanisms have particular applications in a public broadband IP network services environment and in a mobile office environment. Currently, there are three major categories of service access technology for public broadband IP network services. Most service providers make use of digital subscriber loop (DSL), cable modem or structured wiring for Ethernet to provision their services. DSL mainly makes use of a connect-oriented protocol in layer 2 of the OSI model. Cable modem and structured wiring for Ethernet make use of a connection-less protocol in layer 2 of the OSI model. At present, DSL service providers model their service provisioning method on an Internet dial access mechanism. Users will need to "dial-in" to a gateway, an additional internetworking device inserted in the communication path, for authentication and authorization before proceeding.

The mechanism is based on building a tunnel between the subscriber's access device and the gateway before any network service can be provided. Some common encapsulation protocols include PPP over Ethernet (PPPoE) and Layer 2 Tunneling Protocol (L2TP).

Extensions of tunneling models may solve sign on issues for cable modem and structured wiring for Ethernet. However, the tunneling affects the whole or overall network communications and requires special and sophistication programming. The described mechanisms do not model after an Internet dial-up access mechanism. Instead, the mechanisms make use of a common web site sign on model, and subscribers are required to sign on to a special web site, that is the SSO Server, before they are allowed access to the network services.

The described mechanisms are therefore:-
- More scalable to serve many more users than using tunneling;
- Less costly to implement than tunneling;
- More friendly to multi-media traffic that is transmitted over IP multicast; and
- Able to create revenues generating opportunities like pushing advertisements to subscribers from the SSO Server

In some multinational companies, a so-called "mobile office" has been implemented where employees no longer have a fixed office or desk space. When employees come to work, they need to go through a check-in process more or less like a hotel check-in. It is therefore possible that the same employee will be connecting into the company's intranet using different physical Ethernet ports. The described mechanisms of service sign on can then be used to authenticate and authorize the user before allowed access into the corporate intranet. Without the mechanism of service sign on, an administrator will need to manually perform a number of tasks on the internetworking devices to enforce proper security on the intranet.

The described mechanisms of service sign on make use of the capability in creating a point to perform authentication, authorization, network access control and policy enforcement in a broadband IP network. The point of entry into the broadband IP network is provided by the SSO Server. The mechanisms do not need to create any new communication protocol. The mechanisms are accomplished by making sure that data flows during the sign-on stage can only happen in a pre-defined manner.

Normally, the described mechanisms are implemented by appropriate software, that is by means of a combination of web pages, CGI scripts and/or Java servlets, Java applets and back-end network configuration modules. Technically, it is also possible to implement the described SSO Server as a hardware device for better performance or possibly more if required reliability.

The Router can be regarded as an intelligent or program controlled "switch". Routers are well-known and widely used in Internet and like communication networks and are used for routing digital transmissions around and throughout a network. Routers have the capability of transmitting information or not, generally in the manner of an ON-OFF switch say, and so provide access control to some address but not others. Known Routers also provide bandwidth control for certain applications, where for example the rate of admission of data must be reduced, priority control where some packets can be given higher priority, quality control such as delaying certain information, and "don't drop packet" facilities.

A feature of the present invention resides in the SSO server being able to make use of various known Router characteristics to respond to pre-defined access and service policy of the network owner on a per user basis. For example, a VIP user can be given high priority. Order or quality controls to the Router can be provided based on appropriate instructions automatically provided by the SSO server when the User accesses the Internet. These instructions are based on the User ID or other known User data or special User instructions at initial sign on. In the same way, the SSO server can automatically respond to known (pre-registered) User details or instructions to control access to certain data by content/quality or time locks, so that either only certain data is transmitted/received (where sensitive material may be totally barred, say) or only transmitted at certain times of the day. This latter could be used for restricting transmissions to certain users or to children for certain times of each day.

## Claims

1. A service sign-on (SSO) method for use by an internet service provider (ISP) or network owner in a broadband IP internetworking infrastructure for user authentication to permit access of an access device to use network service enabled by the said infrastructure and subsequent access records keeping, said access device being configured for DHCP and incorporating a software supporting Java applet, which method comprises providing a database for storing user-related information, providing a DHCP server for answering DHCP packets from said access device via an existing internetworking device in said infrastructure to establish communication of said access device via the internetworking device with a SSO web server, providing said SSO web server for serving a sign on form to said access device to commence a pre-sign-on state for user authentication, and providing SSO web server for serving Java applet to said access device to maintain a session representing that access to said network service and/or automate DHCP IP address lease renewal; providing said SSO web server for controlling assignment of IP address to said access device, providing said SSO web server for activating a per user access and service control policy on the internetworking device and providing a DNS server for answering DNS queries from said access via the internetworking device for permitting access of said access device to said network service, and means for monitoring and receiving records relating to that access for accounting purpose.

2. The service sign-on method as claimed in claim 1, wherein the internetworking device is an electronic device or computer system that is deployed by said ISP or network owner in a communication path between said access device and the Internet or internal server system, that can be commanded by said SSO web server, using IETF standards IP communication protocol to activate said per user access and service policy.

3. The service sign-on method as claimed in claim 2, wherein the internetworking device is provided by a router.

4. The Service sign-on method as claimed in claim 3, wherein the router is an edge router connected closest to said access device.
